# EUROPEAN PATENT SPECIFICATION

(11) **EP 1 348 894 B1**
(45) Date of publication and mention of the grant of the patent: **15.06.2005**
(21) Application number: 02076242.3
(22) Date of filing: 29.03.2002
(51) Int. Cl.: F16H 61/00

(54) **Continuously variable transmission**
Umschlingungsgetriebe
Transmission à variation continue

(43) Date of publication of application: 01.10.2003
(73) Proprietor: Van Doorne's Transmissie B.V., 5000 AM Tilburg (NL)
(72) Inventor: Van der Sluis, Francis Maria Antonius, 5271 HP Sint-Michielsgestel (NL)

(56) References cited:
- EP-A- 0 989 338
- EP-A- 1 085 241
- DE-A- 4 131 931
- US-A- 5 046 991

## Description

The present invention relates to a continuously variable transmission as defined in the preamble of claim 1.

Such transmissions are generally know, e.g. from EP-A-1085241 showing the features of the preamble of claim 1 which is regarded included here by reference. In this transmission, the hydraulic system is configured with two hydraulic pressure chambers having a corresponding pressure surface, each associated with a moveable sheave of a relevant pulley. Also, it comprises one electronically controllable electrical pump for raising the entire hydraulic content of the system, and another for exchanging the hydraulic fluid of one pressure chamber with the other pressure chamber as may be desired at a transmission ratio change action. The ratio change control pump is designed driveable and rotateable in either direction, so that the pump directly connects to both the first and the second hydraulic pressure chambers of the transmission pulleys. Also the first pump connects directly to the pressure chambers, having merely a one way valve in each connection line between the first and the second pump. Thus, a closed loop separate hydraulic circuit having the ratio pump and the chambers included is created, having connections to the first pump, which acts as a basic feeder pump to said circuit.

A hydraulic circuit of the known, above described design is favourable in that it is composed of a relatively few number of components and in that it may achieve a efficiency advantage in that the pressure fall over one of the two pumps, in casu the ratio pump, is kept limited as when compared to other known designs in which a hydraulic flow is to be created with the sump of the transmission being the hydraulic volume source, i.e. from an atmospheric base pressure. The know transmission has a disadvantage however that electrical pumps are applied, which may at certain applications be too much demanding for the electrical system of the vehicle. Also, at least one pump is a reversible flow type variable speed pump, which has the disadvantage that when a reversal of the flow is actually required this can not be realised instantaneously. Rather it takes a noticeable amount of effort and time, which is experienced as a disadvantage for the smooth control and operation of the transmission. Moreover, for a transmission manufacturer, it requires an electric technology different from common practice mechanical technology. Apart from these considerations, electrical pumps appear to be relatively expensive, so that economically no advantages, or relatively few advantages are gained over known mechanical systems.

The present invention seeks to provide for a novel alternative for the above-described known hydraulic system, having the said efficiency advantage, or at least providing the feature of the closed loop separate hydraulic circuit without the said disadvantages. Potentially also without the use of electrical technology, but rather utilising readily available, relatively economic hydraulic components. According to the invention such is realised in a transmission when the features of the characterising portion of claim 1 are applied.

In the transmission according to the invention, the pumps are preferably mechanically driven, e.g. via the primary shaft of the transmission, i.e. depending on the rotary speed of an engine driving the transmission. The effect of the invertebility of the electric pump is mechanically realised by providing a controllable shift valve in the, preferably electronically controllable, closable hydraulic circuit between the second or ratio pump and the respective hydraulic chamber of each pulley. The shift valve is suited to be operated in two limiting operational modes, as well as in a third, or in-between mode. In a first of the two limiting modes the shift valve realises a direct, i.e. at least virtually unrestrained hydraulic connection between the high pressure, or discharge side of the second pump and the first hydraulic chamber, whereas the second hydraulic chamber is connected to the low pressure, or suction side of said pump. In the respective second limiting mode such hydraulic connections are opposite. In the third mode all of the four above-mentioned hydraulic connections are realised at the same time, however, each at a variable hydraulic restrain, which is set by the position of a valve body of the shift valve generally under the control of a shift valve control pressure. The shift valve applied according to the invention may be favourably produced economically since it is insensitive for tolerances due to a relatively strong negative internal hydraulic overlap that can be permitted. Also however, a smaller overlap may be considered for application in the valve, since thereby a faster pressure response is enabled, since valve movements required for such response are equally smaller. Thus the design of the valve according to the invention allows for a choice between priority to be attached on either functional or on economical advantage of the transmission.

Further, the arrangement according to the invention comprises a pressure valve, by means of which discharge pressure of the first or feeder pump that feeds the closable hydraulic circuit is controlled. Preferably such pressure valve is produced electronically controllable.

Favourably, the arrangement according to the invention incorporates only one non-return valve, here incorporated between the sump of the system and the suction side of the second pump. This feature allows fluid to be supplied to the second pump under all circumstances.

In an elaboration of the novel hydraulic system according to the invention, the closable hydraulic circuit comprises a further pressure valve, that is arranged between the shift valve and the suction side of the second pump for the, albeit indirect, control of the discharge pressure of the second pump Preferably the further pressure valve is produced electronically controllable.

In this latter arrangement of the hydraulic system, a satisfying control behaviour may be attained by producing the pressure valve intended for the control of the discharge pressure of the first pump as a differential pressure valve which is operated under the influence of both the discharge pressure of the first pump and the pressure level set by the further pressure valve comprised in the closable hydraulic circuit. Such arrangement with a simple hydraulically controlled valve may directly save production costs, while an arrangement with a electronically controlled valve may turn out to be economical in that it provides for a universal solution. Since the flow over this valve is relatively large in the system according to the invention, the system is inherently well controllable.

By the arrangement according to the invention, the hydraulic flow in the transmission may be kept within the closable hydraulic circuit by allowing fluid to flow form one pressure chamber into the other. In the arrangement according to the invention, this may even be realised during a transmission ratio change action, at which the volume of the individual pressure chambers may vary considerably. Also, the arrangement allows to keep the hydraulic pressure at a relatively high level, also at such ratio change actions. Thus, in the system according to the invention only relatively small changes in hydraulic volumes within the system need be compensated for by the first pump, i.e. only any difference in volume change between the first and second pressure chambers, as well as, possibly, loss of volume through leakage of hydraulic fluid from the hydraulic system and volumetric compression.

Favourably, as according to a further aspect of the invention, the two pumps are each formed by a pump cycle of a rotary pump such as a rotary vane pump incorporating two or more pump cycles per pump revolution. Each pump or pump cycle may in accordance with the invention be produced in a different volume, whereby the volume of the first or feeder pump is kept smaller than that of the second or ratio pump, e.g. 2 and 6 cc. In yet a further elaboration, another or third pump and/or pump cycle may be provided for accommodating for any auxiliary hydraulic functions, such as for example the closing of clutches that are part of an automotive drive line wherein the transmission according to the invention is to be applied. In such arrangement the latter pump or pump cycle is preferably connected to said auxiliary means by separate hydraulic lines.

In a specific arrangement, in particular when no volume compensation is required for auxiliary hydraulic functions such as for torque converter, cooling and lubrication, the feeder pump is produced electrical. In such arrangements the electrical pump may be produced relatively simple and economical. Also, in a further specific arrangement, in particular when a torque transmission capacity of the variable transmission is relatively modest, the ratio pump may be produced electrical.

The invention will now be elucidated further along a drawing in which:
Figure 1 is a schematic representation, highlighting the hydraulic system of a continuously variable transmission according to the invention;
Figure 2 is a figurative representation of a continuously variable transmission showing the features of claim 1;
Figure 3 is a shift valve of the transmission shown in a third operational mode;
Figure 4 is the shift valve of figure 3, shown in a first operational mode;

In the figures, identical reference numbers relate to identical or at least comparable technical features.

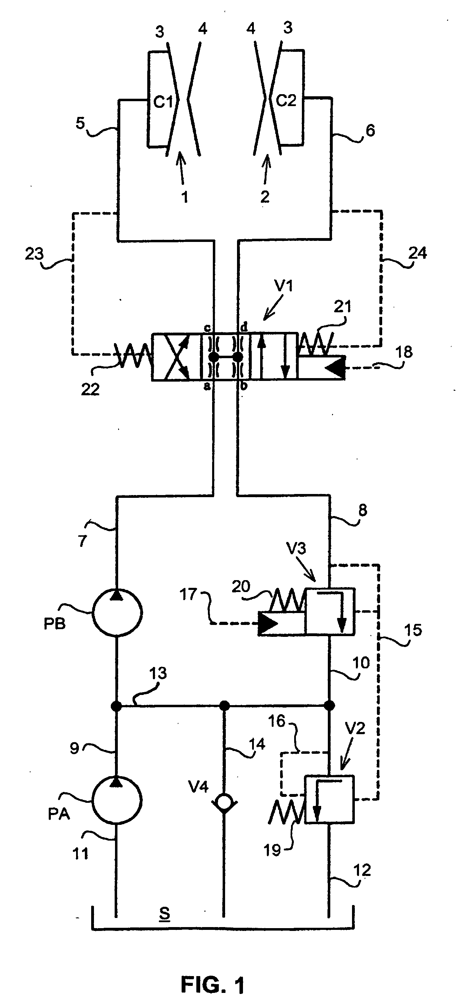

Figure 1 shows first and second pulleys 1 and 2 with sheaves 3, 4, of a continuously variable transmission known per se. Between said sheaves 3, 4 a belt, chain or other transmission element (not depicted) is clamped by a clamping forces, acting on at least one moveably arranged sheave 3 of each pulley 1; 2 and caused by a hydraulic pressure in chambers C1 and C2 associated with such a moving sheaves 3. The clamping force effected on the belt by a pulley 1; 2, thereby effectively determines the maximum friction force between the belt and such pulley, whereby a transmittable torque of the transmission may be set. Favourably chambers C1 and C2 have a corresponding pressure surface for effecting said clamping force. The running diameter of the belt in each pulley 1; 2 may be varied in a mutually co-ordinated manner by axially displacing at least one of said sheaves 3, 4, whereby the transmission ratio may be set. In casu this displacement is caused by varying a hydraulic pressure balance in pressure chambers C1 and C2. The pressure chambers C1, C2, which cause an axial force on said moveable sheaves, are fed via hydraulic lines 5, 6 respectively. The hydraulic lines 5, 6 in turn are ultimately fed from a hydraulic sump S, by means of two pumps PA and PB. The lines 5, 6 directly connect to ports "c" and "d" respectively, i.e. connections or ports, of a shift valve V1. A first pump PA directly connects to sump S via suction line 11, and feeds to hydraulic line 9, which splits into two lines. Line 9 directly connects to the second pump PB, while the second part of line 9, is connected to line 10 via intermediary line 13. Line 10 at one end connects to a pressure control valve V2, which is intended for the control of the discharge pressure of the first pump PA, and at the other end to a further pressure control valve V3. Pump PB via line 7 connects to port "a" of valve V1, while the further pressure valve V3, via line 8 connects to port "b" of valve V1.

The pressure chambers C1, C2, the shift valve V1, the second pump PB, together with the hydraulic lines 5, 6, 7 ,8, 9, 10, 13 constitute a closable hydraulic circuit, closable by shift valve V1, by means of which fluid may be exchanged between the pressure chambers C1, C2 such that, favourably, only a small fluid volume is to be supplied to the system by the first pump PA, even during a transmission ratio change action. The further pressure valve V3 may also be incorporated in the closable hydraulic circuit, preferably between the shift valve V1 and a suction side of the second pump PB to improve the system's controllability.

The shift valve V1 is embodied as a so called 4/3 valve, i.e. a valve with four ports and three operational modes, which each cause a different hydraulic pass through. In the embodiment according to figure 1, the operational mode of valve V1 is determined by a hydraulic control pressure 18, which balances with spring pressures 19, 20. The level of the hydraulic control pressure 18 may be set by a solenoid, not depicted, and controlled by an electronic control system of the transmission. The shift valve V1 is intended for the control of the transmission ratio, i.e. the pressure balance between the first and the second pressure chamber C1; C2, towards a desired value according to one of many generally known control strategies.

Not necessarily, but advantageously both the pressure levels prevailing in the chambers C1 and C2 are also used to influence the shift valve V1 through lines 23 and 24, as is indicated in figure 1.

In this latter arrangement, the said pressure balance in the pressure chambers C1 and C2 may be controlled in dependence on the control pressure 18 in a relatively stable and advantageously consistent manner. Also, in the absence of the variable control pressure, e.g. at failure of the control system, such feed-back of the said pressure levels may render the transmission controllable to some, however considerably less flexible, extent. Further particulars and advantages of such an arrangement are elaborated in the unpublished European patent application no. 00204670.4, which is considered incorporated here by reference. Although this document relates to a different type of hydraulic control arrangement, its teaching may be implemented analogously.

Pressure valve V2 and further pressure valve V3 are both influenced by the pressure set by valve V3 in line 8 via a hydraulic control line 15, while valve V2 is also influenced by the discharge pressure of the first pump PA and further valve V3 is also influenced via a further hydraulic control pressure 17. The pressure valve V2 thus sets the discharge pressure of the first pump PA in dependence on the pressure set by the further pressure valve V3 in line 8. The said further hydraulic control pressure 17 is determined by a solenoid, not depicted, and electronically controlled by the electronic control means of the transmission.

In this particular embodiment of the invention the shift valve V1 is intended for the control of the clamping forces, i.e. the pressure level in the first and in the second pressure chamber C1; C2, towards desired values, either directly by measuring at least one of the actual pressure levels in the pressure chambers C1, C2, or indirectly by measuring the actual pressure level in line 8 and subsequently calculating the pressure levels in the pressure chambers C1, C2 resulting therefrom given the valve setting of the shift valve V1.

Valves V2 and V3 are embodied as pressure control valves, operating by opening and closing the hydraulic line in which they are incorporated by shifting a closure element to a variable extent over an opening connecting the hydraulic lines on either side of the valve. The shifting, i.e. opening and closing of the opening of the valve depends on an effective position of said closure element, realised by oppositely acting forces, e.g. a spring force and a force effected on the basis of a hydraulic pressure. These calculations are e.g. based on the electronic setting signals for the solenoids.

Valve V2 is alternatively characterised as a passive valve, whereas valves V1 and V3 are alternatively denoted active valves since they may be influenced by the electronic control means of the transmission via a solenoid means not depicted in the drawing. Valve V3 is further also denoted a differential pressure valve since it controls a pressure on the basis of a pressure difference.

A non-return valve V4 may be included in line 14, connected to line 13, which valve may allow for direct suction of hydraulic fluid from the sump S by the second pump PB to safeguard a sufficient flow of fluid towards this pump PB.

The transmission and hydraulic system according to the invention realises a minimal pressure in the system by means of pump PA, while pump PB is only required to take account of required or desired pressure differences in the system, thereby realising a relatively fast response and relatively low energy consumption by the hydraulic system. Pump PA in this system is predominantly required to compensate for the relatively small changes in the hydraulic volume of the system, depending on both the actual transmission ratio and the required clamping force. Pump PA further compensates for volumetric compression, for accepted leakage in the closable hydraulic circuit - the fluid flow passing through the pressure valve V2 is designed to be as small as possible - and, depending on the system in which the transmission may be incorporated, for auxiliary hydraulic functions such as for a torque converter.

Pump PA may therefore alternatively be denoted feeder pump, while pump PB would be denoted ratio pump. In this manner, at a constant speed of the engine it is still possible to realise a pressure difference by externally, i.e. using the electronic control means, controlling the further pressure valve V3.

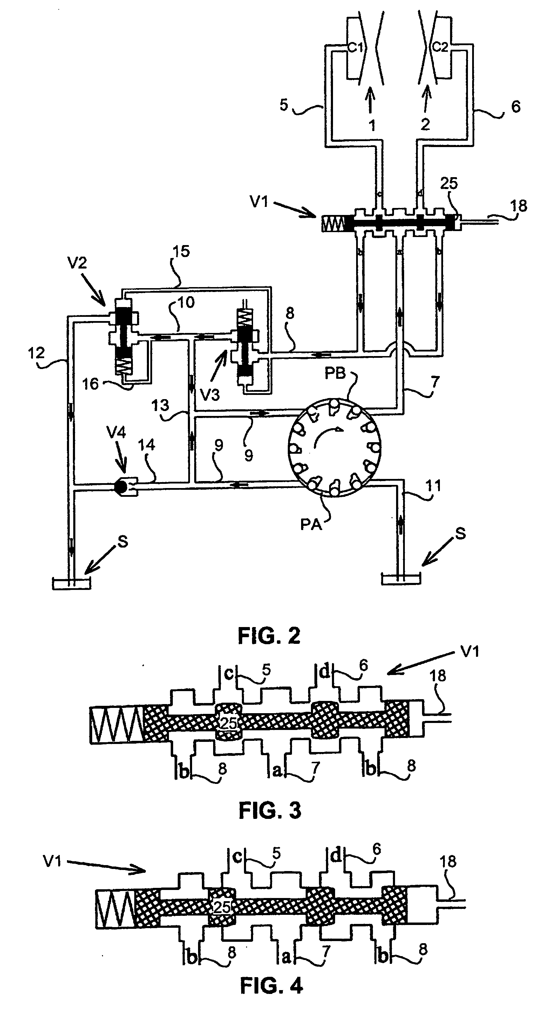

Figure 2 is a figurative representation of the transmission explained along figure 1. It shows the Pumps PA and PB to be composed by poles or cycles of a single rotary roller vane pump. The valve V1 is figuratively represented with negative overlap, i.e. has openings between the valve body 25 of the valve V1 and the ports a, b, c and d when in the third operational mode where all ports are interconnected. It also shows the valve V1 to be embodied with one feeding port, in casu port "b" separated in two separate ports so a to favourably enable the connection features in three different modes as described here.

Figure 3 shows the valve V1 in the same mode more in detail. In this first mode, ports "a" and "c", i.e. line parts 7 and 5, ports "a" and "d", i.e. line parts 7 and 6, ports "c" and "b", i.e. line parts 5 and 8 and ports "b" and "d", i.e. line parts 8 and 6, are interconnected. By varying in such first operational mode the hydraulic control pressure 18, the exact position of the valve body 25 with respect to said ports a, b, c, and d may be determined, thereby controlling flow through openings available for fluid flow between the respective line parts 5, 6, 7, and 8. Accordingly, the flow through such openings may be controlled, of course in dependency on the pressure levels prevailing in said line parts 5, 6, 7, and 8. It is noted that this type of valve and its operation are known per se, also by its use in transmission control systems.

Figure 4 clarifies the first operational mode of valve V1. Here the valve body is in its left most position closing the connection between line parts 8 and 5 and 6 and 7 and largely unrestricted flow between line parts 5 and 7 and 6 and 8. This type of valve V1 is said to have a positive overlap between the valve body 25, and a cylindrical housing part of the valve V1, in between ports "a" and "d", and in between ports "b" and "c".

The second operational mode of valve V1 is not depicted. In this mode the valve body 25 of the valve V1 is shifted to the right most end as in the current picture, so that a connection occurs between ports "b" and "c", i.e. between line parts 5 and 8, and also between ports "a" and "d", i.e. between line parts 6 and 7 and the other two connections (5 and 7 and 6 and 8) are closed.

## Claims

1. Continuously variable transmission comprising pulleys with at least one axially moveable sheave, the movement of which is realised by controlling a hydraulic pressure in the pressure chambers (C1, C2) associated with such moveable sheaves (3), and control means (V2) for effecting the control of said hydraulic pressures, the transmission further comprising a first pump (PA) for feeding a closable hydraulic circuit of the transmission having a controllable discharge pressure, which closable hydraulic circuit includes the pressure chambers (C1, C2) as well as a second pump (PB), **characterised in that** the closable hydraulic circuit (C1, C2, 5, 6, 7 ,8, 9, 10, 13, PB) further includes a shift valve (V1), by means of which a discharge side of the second pump (PB) may be selectively connected to either one or both of said pressure chambers (C1, C2), whereby a suction side of the second pump (PB) respectively is connected either to the respective other pressure chamber (C1, C2) or also to both said pressure chambers (C1, C2).

2. Transmission according to claim 1, **characterised in that** a discharge pressure of the first pump (PA) is controlled by means of a pressure control valve (V2).

3. Transmission according to claim 2, **characterised in that** the closable hydraulic circuit further includes a further pressure control valve (V3), positioned between the shift vale (V1) and the suction side of the second pump (PB) for controlling a pressure level in the closable hydraulic circuit.

4. Transmission according to claim 3, **characterised in that** the further pressure control valve (V3) may be influenced both by a controllable further hydraulic control pressure (17) and by the said pressure level in the closable hydraulic circuit (C1, C2, 5, 6, 7 ,8, 9, 10, 13, PB).

5. Transmission according to any one of the claims 3-4, **characterised in that** the pressure control valve (V2) may be influenced both by the discharge pressure of the first pump (PA) and by the said pressure level in the closable hydraulic circuit (C1, C2, 5, 6, 7 ,8, 9, 10, 13, PB).

6. Transmission according to any one of the preceding claims, **characterised in that** a non-return valve (V4) is provided between the suction side of the second pump (PB) and a sump (S) of the transmission.

7. Transmission according to any one of the preceding claims, **characterised in that** the shift valve (V1) may by operated in two limiting operational modes, as well as in a third, or in-between mode, whereby in a first of the two limiting modes the shift valve (V1) realises a essentially unrestrained hydraulic connection between the discharge side of the second pump (PB) and a first (C1) of the hydraulic chambers (C1, C2), whereas a second (C2) of the hydraulic chambers (C1, C2) is connected to the suction side of said second pump (PB), whereby in the respective second limiting mode such hydraulic connections are opposite and whereby in the third mode all of the above-mentioned four hydraulic connections are realised simultaneously, each at a hydraulic restrain.

8. Transmission according to claim 7, **characterised in that** said third mode the said hydraulic restrain of each of the four hydraulic connections is variable and is determined by the position of a valve body (25) of the shift valve (V1) relative to the valve ports (a, b, c, d).

9. Transmission according to claim 8, **characterised in that** the position of the valve body (25) may be influenced by a controllable hydraulic control pressure (18).

10. Transmission according to claim 8 or 9, **characterised in that** the position of the valve body (25) may be influenced by the pressure prevailing in each of the pressure chambers (C1, C2).

11. Transmission according to any of the preceding claims, **characterised in that** each pump (PA; PB) is formed as a pump cycle of a single rotary pump, preferably a roller vane pump.

12. Transmission according to any of the preceding claims, **characterised in that** the volume yield per revolution of the first pump (PA) is considerably smaller than the volume yield per revolution of the second pump (PB).

## Patentansprüche

1. Stufenloses Getriebe mit Riemenscheiben, die mindestens eine axial bewegliche Rillenscheibe aufweisen, deren Bewegung durch Steuerung eines Hydraulikdrucks in den solchen beweglichen Rillenscheiben (3) zugeordneten Druckkammern (C1, C2) realisiert wird, und Steuermitteln (V2) zur Durchführung der Steuerung der Hydraulikdrücke, wobei das Getriebe weiterhin eine erste Pumpe (PA) zur Speisung eines schließbaren Hydraulikkreises des Getriebes mit einem steuerbaren Austrittsdruck aufweist, wobei der schließbare Hydraulikkreis die Druckkammern (C1, C2) sowie eine zweite Pumpe (PB) enthält, **dadurch gekennzeichnet, dass** der schließbare Hydraulikkreis (C1, C2, 5, 6, 7, 8, 9, 10, 13, PB) des Weiteren ein Schaltventil (V1) enthält, mittels dessen eine Austrittsseite der zweiten Pumpe (PB) gezielt mit einer der oder beiden Druckkammern (C1, C2) verbunden werden kann, wodurch eine Saugseite der zweiten Pumpe (PB) entweder mit der jeweiligen anderen Druckkammer (C1, C2) bzw. auch mit beiden Druckkammern (C1, C2) verbunden wird.

2. Getriebe nach Anspruch 1, **dadurch gekennzeichnet, dass** ein Austrittsdruck der ersten Pumpe (PA) durch ein Drucksteuerventil (V2) gesteuert wird.

3. Getriebe nach Anspruch 2, **dadurch gekennzeichnet, dass** der schließbare Hydraulikkreis des Weiteren ein weiteres Drucksteuerventil (V3) enthält, das zwischen dem Schaltventil (V1) und der Saugseite der zweiten Pumpe (PB) zur Steuerung einer Druckhöhe im schließbaren Hydraulikkreis angeordnet ist.

4. Getriebe nach Anspruch 3, **dadurch gekennzeichnet, dass** das weitere Drucksteuerventil (V3) sowohl durch einen steuerbaren weiteren Hydrauliksteuerdruck (17) als auch durch die Druckhöhe im schließbaren Hydraulikkreis (C1, C2, 5, 6, 7, 8, 9, 10, 13, PB) beeinflusst werden kann.

5. Getriebe nach einem der Ansprüche 3-4, **dadurch gekennzeichnet, dass** das Drucksteuerventil (V2) durch den Austrittsdruck der ersten Pumpe (PA) und durch die Druckhöhe im schließbaren Hydraulikkreis (C1, C2, 5, 6, 7, 8, 9, 10, 13, PB) beeinf lusst werden kann.

6. Getriebe nach einem der vorhergehenden Ansprüche, **dadurch gekennzeichnet, dass** ein Rückschlagventil (V4) zwischen der Saugseite der zweiten Pumpe (PB) und einem Sumpf (S) des Getriebes vorgesehen ist.

7. Getriebe nach einem der vorhergehenden Ansprüche, **dadurch gekennzeichnet, dass** das Schaltventil (V1) in zwei Begrenzungsbetriebsarten sowie in einer dritten oder Zwischenbetriebsart betrieben werden kann, wobei das Schaltventil (V1) in einer ersten der beiden Begrenzungsbetriebsarten eine im Wesentlichen uneingeschränkte Hydraulikverbindung zwischen der Austrittsseite der zweiten Pumpe (PB) und einer ersten (C1) der Hydraulikkammern (C1, C2) realisiert, während eine zweite (C2) der Hydraulikkammern (C1, C2) mit der Saugseite der zweiten Pumpe (PB) verbunden ist, wodurch solche Hydraulikverbindungen in der jeweiligen zweiten Begrenzungsbetriebsart entgegengesetzt sind und wodurch in der dritten Betriebsart alle der oben erwähnten vier Hydraulikverbindungen gleichzeitig realisiert werden, jede unter hydraulischer Einschränkung.

8. Getriebe nach Anspruch 7, **dadurch gekennzeichnet, dass** in der dritten Betriebsart die hydraulische Einschränkung jeder der vier Hydraulikverbindungen variabel ist und durch die Position eines Ventilkörpers (25) des Schaltventils (V1) bezüglich der Ventilöffnungen (a, b, c, d) bestimmt wird.

9. Getriebe nach Anspruch 8, **dadurch gekennzeichnet, dass** die Position des Ventilkörpers (25) durch einen steuerbaren Hydrauliksteuerdruck (18) beeinflusst werden kann.

10. Getriebe nach Anspruch 8 oder 9, **dadurch gekennzeichnet, dass** die Position des Ventilkörpers (25) durch den in jeder der Druckkammern (C1, C2) vorherrschenden Druck beeinflusst werden kann.

11. Getriebe nach einem der vorhergehenden Ansprüche, **dadurch gekennzeichnet, dass** jede Pumpe (PA; PB) als ein Pumpenzyklus einer einzigen Rotationspumpe, vorzugsweise einer Rollenzellenpumpe, ausgebildet ist.

12. Getriebe nach einem der vorhergehenden Ansprüche, **dadurch gekennzeichnet, dass** die Volumenausbeute pro Umdrehung der ersten Pumpe (PA) wesentlich geringer ist als die Volumenausbeute pro Umdrehung der zweiten Pumpe (PB).

## Revendications

1. Transmission à variation continue comprenant des poulies comprenant au moins un disque axialement mobile, dont le déplacement est réalisé en commandant une pression hydraulique dans les chambres de pression (C1, C2) associées auxdits disques mobiles (3), et des moyens de commande (V2) pour procéder à la commande desdites pressions hydrauliques, la transmission comprenant en outre une première pompe (PA) pour alimenter un circuit hydraulique fermable de la transmission présentant une pression de décharge contrôlable, ledit circuit hydraulique fermable comprenant les chambres de pression (C1, C2) ainsi qu'une deuxième pompe (PB), **caractérisée en ce que** le circuit hydraulique fermable (C1, C2, 5, 6, 7, 8, 9, 10, 13 PB) comprend en outre une vanne coulissante (V1) au moyen de laquelle un côté de décharge de la deuxième pompe (PB) peut être connecté d'une façon sélective soit à l'une ou l'autre, soit à l'une et l'autre desdites deux chambres de pression (C1, C2), dans laquelle un côté d'aspiration de la deuxième pompe (PB) est respectivement connecté soit à l'autre chambre de pression respective (C1, C2), soit aussi auxdites deux chambres de pression (C1, C2).

2. Transmission selon la revendication 1, **caractérisée en ce qu'**une pression de décharge de la première pompe (PA) est commandée au moyen d'une vanne de commande de pression (V2).

3. Transmission selon la revendication 2, **caractérisée en ce que** le circuit hydraulique fermable comprend en plus une vanne de commande de pression supplémentaire (V3) positionnée entre la vanne coulissante (V1) et le côté d'aspiration de la deuxième pompe (PB) pour commander un niveau de pression dans le circuit hydraulique fermable.

4. Transmission selon la revendication 3, **caractérisée en ce que** la vanne de commande de pression supplémentaire (V3) peut être influencée à la fois par une pression de commande hydraulique contrôlable supplémentaire (17) et par ledit niveau de pression dans le circuit hydraulique fermable (C1, C2, 5, 6, 7, 8, 9, 10, 13, PB).

5. Transmission selon l'une quelconque des revendications 3 et 4, **caractérisée en ce que** la vanne de commande de pression (V2) peut être influencée à la fois par la pression de décharge de la première pompe (PA) et par ledit niveau de pression dans le circuit hydraulique fermable (C1, C2, 5, 6, 7, 8, 9, 10, 13, PB).

6. Transmission selon l'une quelconque des revendications précédentes, **caractérisée en ce qu'**une soupape de non-retour (V4) est prévue entre le côté d'aspiration de la deuxième pompe (PB) et un carter (S) de la transmission.

7. Transmission selon l'une quelconque des revendications précédentes, **caractérisée en ce que** la vanne coulissante (V1) peut être actionnée dans deux modes opératoires de limitation, ainsi que dans un troisième, ou mode intermédiaire, dans laquelle, dans un premier des deux modes de limitation, la vanne coulissante (V1) réalise une connexion hydraulique essentiellement sans restriction entre le côté de décharge de la deuxième pompe (PB) et une première (C1) des chambres hydrauliques (C1, C2), alors qu'une deuxième (C2) des chambres hydrauliques (C1, C2) est connectée au côté d'aspiration de ladite deuxième pompe (PB), dans laquelle, dans le deuxième mode de limitation respectif, ces connexions hydrauliques sont inversées, et dans laquelle, dans le troisième mode, chacune des quatre connexions hydrauliques mentionnées ci-dessus sont réalisées simultanément, chacune avec une restriction hydraulique.

8. Transmission selon la revendication 7, **caractérisée en ce que**, dans ledit troisième mode, ladite restriction hydraulique de chacune des quatre connexions hydrauliques est variable et est déterminée par la position d'un corps de vanne (25) de la vanne coulissante (V1) par rapport aux ports de la vanne (a, b, c, d).

9. Transmission selon la revendication 8, **caractérisée en ce que** la position du corps de vanne (25) peut être influencée par une pression de commande hydraulique contrôlable (18).

10. Transmission selon la revendication 8 ou 9, **caractérisée** en ce la position du corps de vanne (25) peut être influencée par la pression régnant dans chacune des chambres de pression (C1, C2).

11. Transmission selon l'une quelconque des revendications précédentes, **caractérisée en ce que** chaque pompe (PA, PB) est formée comme un cycle de pompe d'une pompe rotative unique, de préférence une pompe rotative à palettes.

12. Transmission selon l'une quelconque des revendications précédentes, **caractérisée en ce que** le rendement volumique par révolution de la première pompe (PA) est considérablement plus petit que le rendement volumique par révolution de la deuxième pompe (PB).
